# EUROPEAN PATENT SPECIFICATION

(11) **EP 3 698 688 B1**
(45) Date of publication and mention of the grant of the patent: **04.09.2024**
(21) Application number: 20157830.9
(22) Date of filing: 18.02.2020
(51) Int. Cl.: A47J 42/18

(54) **GRINDER-DOSER FOR BEANS, FOR EXAMPLE COFFEE BEANS, WITH A DEVICE FOR ADJUSTING THE GRINDING GRANULOMETRY**
MÜHLENDOSIERER FÜR BOHNEN, BEISPIELSWEISE KAFFEEBOHNEN, MIT EINER VORRICHTUNG ZUR ANPASSUNG DER MAHLGRANULOMETRIE
MOULIN-DOSEUR POUR GRAINS, PAR EXEMPLE LES GRAINS DE CAFÉ, COMPORTANT UN DISPOSITIF PERMETTANT DE RÉGLER LA GRANULOMÉTRIE DE LA MOUTURE

(30) Priority: 25.02.2019 IT 201900002667
(43) Date of publication of application: 26.08.2020
(73) Proprietor: MAZZER LUIGI S.P.A., 30037 Scorzè (VE) (IT)
(72) Inventor: MICHIELAN, Mauro, I-30037 Scorzè, VENEZIA (IT); MOTTA, Michele, I-30037 Scorzè, VENEZIA (IT)
(74) Representative: Zanettin, Gianluigi

(56) References cited:
- DE-C- 7 970
- DE-C- 965 763
- IT-B- 1 226 095

## Description

### FIELD OF APPLICATION

The present invention relates to a grinder-doser for beans, for example coffee beans, with a device for adjusting the grinding granulometry.

### PRIOR ART

In particular, as is known, there exist grinder-dosers for espresso preparations. Grinder-dosers for preparations other than espresso are also known such as, for example, grinder-dosers for Turkish coffee or American coffee.

These coffee-based preparations require different grinding granulometries so as to optimize the specific brewing technique used to extract coffee for preparing the corresponding beverage. In particular, the granulometry has an average particle size which progressively increases ranging from the Turkish-style grinding to espresso or American coffee (also referred to as filtered coffee).

There is also the need to offer the user high accuracy in the research of the granulometry of ground coffee around the degree of granulometry typical for the specific coffee-based preparation.

In a coffee grinder that uses toothed grinders as a crushing tool, the different profiles of granulometric distribution of the coffee powder for the different types of preparations are obtained by acting on the relative distance between the grinders crushing the beans to a powder.

The smaller the relative displacement between the grinders, the greater the degree of accuracy with which a determined and optimal granulometric profile of the coffee powder is defined, in order to enhance the organoleptic properties of the beverage extracted with the specific selected infusion/extraction method.

The best system known on the market is therefore a continuous micrometric adjustment system, wherein all the adjustment positions within a specific range are possible and selectable.

An adjustment system which allows this continuous adjustment is, for example, adjustment by means of a nut-screw coupling by which the grinders (or in general the tools used for crushing the beans) move away from, or approach, each other.

In practical embodiments, at least one of the grinders is driven and rotated by an electric motor; the other grinder is usually fixed. The grinders are housed inside a grinding chamber.

The grinders in turn are supported and kept appropriately oriented by relative grinder-holders in order to provide an annular outlet section between the grinders that is constant over the entire perimeter thereof, to have a homogeneous distribution of the powder at each outlet point from the grinders. It is therefore understood that the grinders are coaxial with each other.

The driven grinder is coupled to the transmission axis of the motor by means of the relative grinder-holder, and it is put in rotation by the electric motor. The adjustment of the distance between the grinders is obtained by moving at least one of the grinders, which in turn is coupled to its grinder-holder, placing it in axial movement (i.e. by bringing it closer or further away from the other grinder along an axial direction parallel to the rotation axis of the grinder) and this is commonly done, as mentioned, by a nut-screw coupling.

The adjustment system with the nut-screw coupling may be coaxial to the rotation axis of the grinders. In this case, such adjustment system is integrated within the containment body of the grinder-doser.

An internal adjustment system complicates the internal structure of the grinder-doser in the area where the grinders are housed. In some cases, this may also lead to complications in the operative management of the grinders, in terms of maintenance, for example.

Therefore, grinder-dosers have been proposed wherein the adjustment system is arranged outside the containment body of the grinder-doser. The adjustment system is associated with an external appendage of the grinder-doser and is operatively connected to the movable lower grinder by means of a lever, which transmits the adjustment system movements to the grinder.

The lever is arranged below the body of the grinder-doser so as to contact the axially movable lower grinder more easily. The lever and the grinder are not mechanically connected, but simply contact each other. This allows the lever to be freely oriented with respect to the axis of the grinder during its oscillations. Examples of such technical solution are disclosed in IT 1 226 095 B, DE 965 763 C and DE 7 970 C.

Such technical solution is constructively very easy to implement. However, it is not entirely satisfactory from an operative point of view. The grinder is in fact guided by the lever only in thrust, that is, when the adjustment system imposes axial movements towards the upper grinder. When the adjustment system requires axial movements away from the upper grinder, the lever does not actively operate on the grinder. The lower grinder is in fact lowered by the action of gravity or the thrust generated by the beans that have penetrated between the grinders.

The inevitable axial sliding friction may slow down the lowering of the grinder, preventing the correct axial positioning of the grinder and thus negatively affecting the precision in adjusting the grinding granulometry.

### DISCLOSURE OF THE INVENTION

The need of solving the drawbacks and limitations mentioned with reference to the prior art is therefore felt.

Such a need is met by a coffee grinder-doser according to claim 1.

### DESCRIPTION OF THE DRAWINGS

Further features and advantages of the present invention will appear more clearly from the following description of preferred non-limiting embodiments thereof, wherein:
- figure 1 shows a top perspective view of a grinder-doser according to an embodiment of the present invention, illustrated with some parts removed to better illustrate others;
- figure 2 shows a bottom perspective view of the grinder-doser in figure 1;
- figure 3 shows an orthogonal view of the grinder-doser in figure 1 according to the arrow III indicated therein;
- figure 4 shows an orthogonal sectional view of the grinder-doser in figure 1;
- figure 5 shows a partially-sectional perspective view of the grinder-doser in figure 1;
- figure 6 shows an orthogonal sectional view of a grinder-doser according to an alternative embodiment of the present invention; and
- figure 7 shows the grinder-doser in figure 4, provided with an additional attachment point for the fulcrum of the lever, and illustrated with some possible orientations of a control element of the adjustment device of the grinder-doser itself.

Elements or parts of elements in common to the embodiments described below are referred to with the same reference numerals.

### DETAILED DESCRIPTION

With reference to the above figures, reference numeral 1 globally denotes a coffee grinder-doser according to the present invention.

It should be noted that the grinder-doser of the present invention may not only be applied to grinding of coffee beans, but also to grinding for any beverage or infusion that may be obtained from beans, preferably roasted and subsequently ground, in order to obtain a powder suitable for infusion. Therefore, reference to a "coffee" grinder-doser is made by way of a non-limiting, non-exhaustive, and merely exemplary option of a possible use of the grinder-doser in accordance with the present invention.

The grinder-doser comprises a body 10 which encloses a first grinder 11 supported by a relative first grinder-holder 21, and a second grinder 12 supported by a relative second grinder-holder 22. The body 10 may comprise a main hollow element 7 which houses said grinders 11,12.

Preferably, the body 10 is provided, on the upper part, with an opening 9 for accessing a grinding chamber 13 for coffee beans made inside said body 10. Typically, such access opening 9 is coupled to conduits or a hopper (not shown in the appended figures) for feeding the beans. The body 10 is furthermore provided, at the grinding chamber 13, with an outlet 8 for ground coffee.

The first and second grinders 11,12 are facing one to the other along an axial direction X-X and are housed in the grinding chamber 13.

The grinding chamber typically has a cylindrical shape, symmetrical with respect to said axial direction X-X.

The grinders 11,12 are mechanically fixed to the respective grinder-holder 21,22. The grinders 11,12 are provided with teeth 14 which cooperate with each other for crushing or grinding the beans. The granulometry obtainable by the grinders 11,12 is given by the relative axial distance D between the teeth 14 of the respective first and second grinders 11,12.

Usually at least one of said grinders 11,12 is a driven grinder, i.e. it is mechanically connected to motor means 30 for its rotation, so as to initiate the grinding. The other grinder is usually fixed in rotation.

For example, as illustrated in the appended figures, the first grinder 11 is fixed in rotation and the second grinder 12 rotates due to the action of motor means 30 to which it is operatively connected.

As will be further explained below, one of said grinders 12 is movable along the axial direction X-X with respect to the other grinder 11. The adjustment of the axial position of the axially movable grinder 12 with respect to the other axially fixed grinder 11 allows the relative axial distance D between the two grinders, and therefore the grinding granulometry, to be adjusted.

Preferably, said grinders 11,12 are coaxial with each other with respect to a rotation axis R-R of at least one grinder, which is parallel to said axial direction X-X.

In particular, the motor means 30 which cause the rotating grinder 12 to rotate comprise an electric motor 31 provided with a drive shaft 32 directly or indirectly connected to such second grinder 12 by means of the relative second grinder-holder 22.

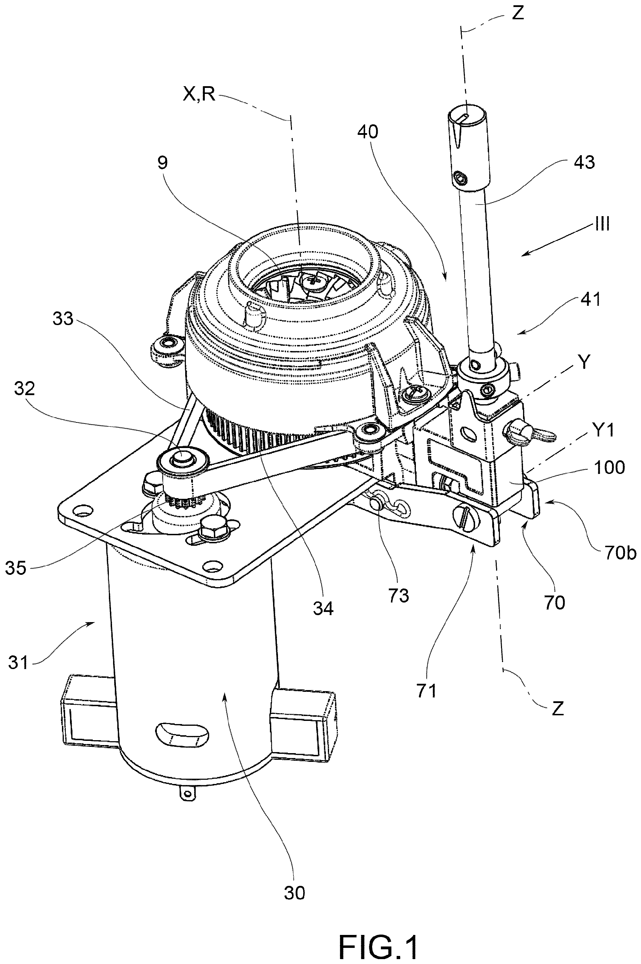

Preferably, as shown in figure 1, the drive shaft 32 of the electric motor 31 is offset from the rotation axis R-R of the driven grinder 12 and is connected thereto, for example, by means of a toothed belt 33 which connects a toothed wheel 34 (keyed onto the second grinder-holder 22 around the rotation axis R-R) to a pinion 35 integral with the drive shaft 32.

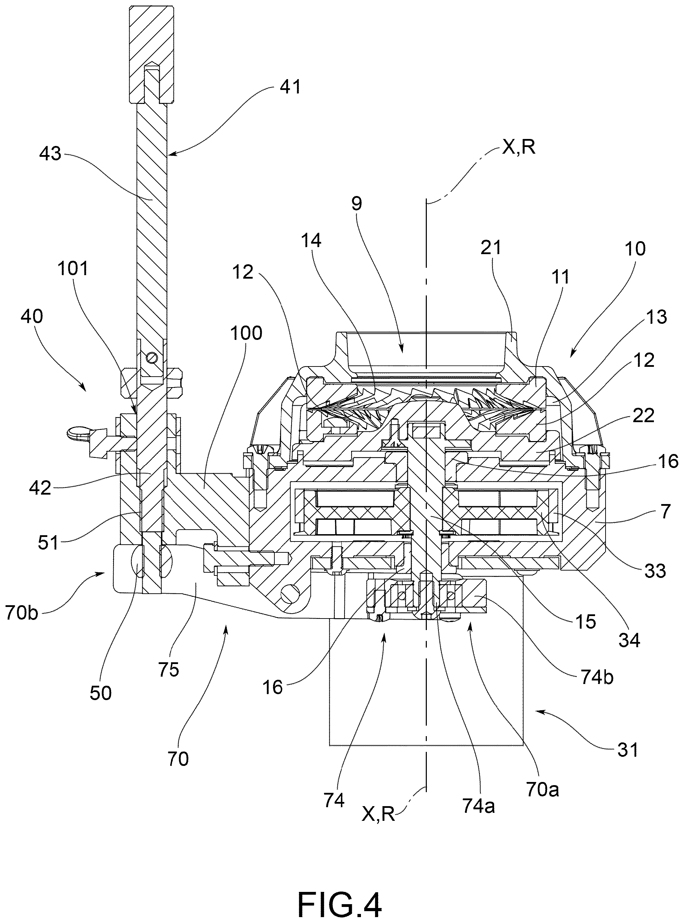

As illustrated in particular in Figure 4, the second grinder-holder 22 which supports the second grinder 12 in rotation is provided with a shaft 15, which is constrained in rotation on the body 10 by at least two bushings or bearings 16, which guide it in rotation.

Preferably, the axially movable grinder 12 is the rotating (driven) grinder. In such case, the two bushings or bearings 16 which guide the shaft 15 of the second grinder-holder in rotation, also allow its translation in the axial direction.

The offset configuration between the motor axis and the grinder axis R-R is preferable with respect to a coaxial configuration in that:
- it allows to position the motor means 30 away from the grinding chamber depending on the dimensions around it; and
- the connection with toothed belt or wheels between the two axes allows to suitably multiply the motor revolutions at the grinder axis, using already known systems.

As shown in the appended figures, the grinder-doser 1 comprises an adjustment device 40 of the relative axial distance D between said first and second grinders 11,12.

The adjustment device 40 in turn comprises a control element 41 which is supported by said body 10 in a position offset from said axial direction X-X. In particular, such control element 41 is arranged outside the body 10 of the grinder-doser 1.

In particular, as illustrated in the appended figures, the control element 41 is supported by said body 10 by means of a support appendage 100 rigidly fixed to the body 10. In more detail, the support appendage 100 defines an engagement seat 101 for the control element 41.

The control element 41 is kinematically connected to the axially movable grinder 12 by means of a lever 70 pivoted on said body 10 to impose on said axially movable grinder 12 controlled movements along said axial direction X-X so as to adjust the relative axial distance D between said first and second grinders 11,12.

In this way, the adjustment of the relative axial distance D between the grinders 11,12 is obtained by axially moving only one grinder 12 and the relative grinder-holder 22.

The adjustment device 40 of the relative axial distance D between said first and second grinders 11,12 therefore serves as a device for adjusting the grinding granulometry.

According to the invention, said lever 70 is kinematically connected to:
- the control element 41 by means of a first hinge 71; and
- the axially movable grinder 12 by means of a second hinge 72.

The rotation axes Y1-Y1 and Y2-Y2 of said first and second hinges 71,72 are parallel to the fulcrum axis Y-Y of said lever 70.

Thanks to the invention, the axial movement of the movable grinder 12 is guided in both ways along said axial direction X-X (i.e. both towards and away from the other grinder 11) by the lever 70 and therefore by the control element 41. Therefore, contrary to what is contemplated in prior art solutions, the axial movement of the movable grinder 12 is always perfectly controlled and guided by the adjustment device 40.

This is all made possible by the fact that the constraint between the lever 70 and the movable grinder 12 is achieved by means of a hinge (second hinge 72) with an axis parallel to the fulcrum axis. The second hinge 72 in fact allows to transmit to the movable grinder 12 only the axial motion components of the lever 70, while leaving the lever free to modify its own inclination with respect to the axial direction X-X of the grinder 12 by rotating around the fulcrum axis Y-Y.

In this way, the drawbacks of the prior art solutions are fully addressed, preventing the inevitable axial sliding friction from affecting the correct axial positioning of the axially movable grinder, and therefore the precision in adjusting the axial distance between the grinders, and therefore the precision in adjusting the grinding granulometry.

This is all made possible without affecting the operation of the lever and without requiring complex technical measures.

Similarly, the connection between the control element 41 and the lever 70 by means of a hinge (first hinge 71) with an axis parallel to the fulcrum axis Y-Y allows to transmit to the lever 70 only the axial motion components imposed by the control element 41, while leaving the lever free to modify its own inclination with respect to the control element 41. As will be further explained below, this also provides for broad freedom of orientation of the control element 41 with respect to the lever 70, allowing the grinder-doser 1 to be adapted, upon installation, to specific requirements of overall dimension reduction.

According to a preferred embodiment illustrated in the appended figures, the axially movable grinder is the second grinder 12, i.e. the driven grinder, connected to motor means 30 for its rotation around said axial direction X-X. Preferably, the first grinder 11 is instead fixed both in rotation and axially.

More in detail, such second grinder 12 is kinematically connected to said lever 70 by means of the second grinder-holder 22, which in turn is kinematically connected to the second hinge 72 by interposition of a joint 74 suitable to allow the free rotation of the second grinder-holder 22 and the associated second grinder 12 around said axial direction (X-X) with respect to said lever 70.

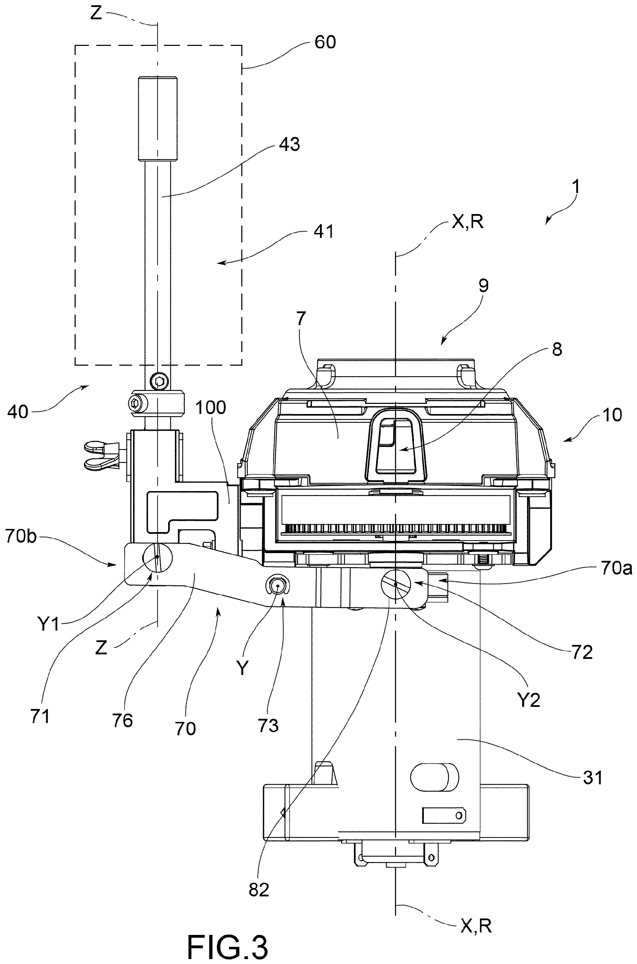

In particular, as shown in figures 3 and 4, said joint 74 may comprise a support bearing 74a for the shaft 15 of the second grinder-holder 22 and a bearing-holder 74b. The latter is connected to the lever by means of said second hinge 72, defined by a pair of coaxial pins 82 which connect the bearing-holder 74b to the lever 70 along the hinge axis Y1-Y1.

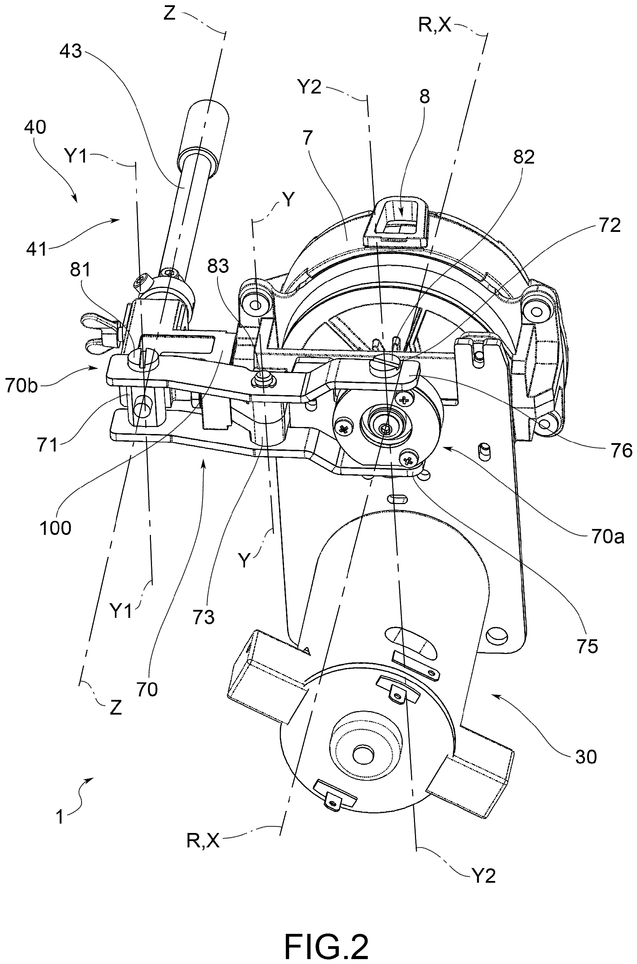

Advantageously, as illustrated in particular in figures 2 and 3, the lever 70 is constituted by two parallel shaped rods 75,76, connected to each other by a pin 83 which defines the fulcrum 73 of the lever on the body 10, and two distinct pairs of coaxial pins 81 and 82 which respectively form the first hinge 71 and the second hinge 72.

According to a particularly preferred embodiment, the first (fixed) grinder 11 is an upper grinder, while the second (axially movable and rotating) grinder 12 is a lower grinder. Reference is made to a lower and an upper position in relation to said axial direction X-X which in use is preferably vertically oriented.

The preferred choice of adjusting the axial distance D between the two grinders by operating on the lower grinder 12 instead of on the upper grinder 11 allows the grinders to be replaced and cleaned by disassembling the first grinder-holder 21, without losing the degree of adjustment defined by the axial position of the second grinder-holder 22. In fact, access to the grinding chamber 13 is obtained by disassembling and thus removing the first (fixed) grinder-holder 21 from the body 10.

In accordance with the embodiments illustrated in the appended figures, said lever 70 in use is arranged below the body 10, preferably in an axially opposite position with respect to said opening 9 for accessing the grinding chamber 13.

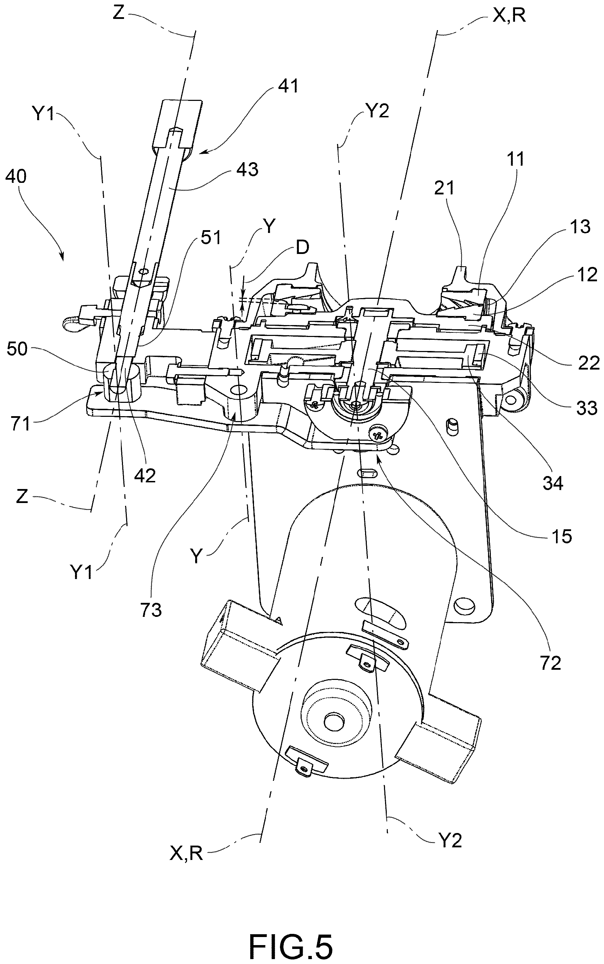

Preferably, as illustrated in figures 1 to 5, said lever 70 is connected to opposite ends 70a,70b with respect to its fulcrum 73, respectively to the axially movable grinder 12 and the control element 41. In other words, the fulcrum 73 is located in an intermediate position between the connection with the control element 41 and the connection with the axially movable grinder 12. Operatively, a movement with an axial component transmitted by the control element 41 to the lever 70 in a first axial direction results in an axial motion of opposite direction on the axially movable grinder 12.

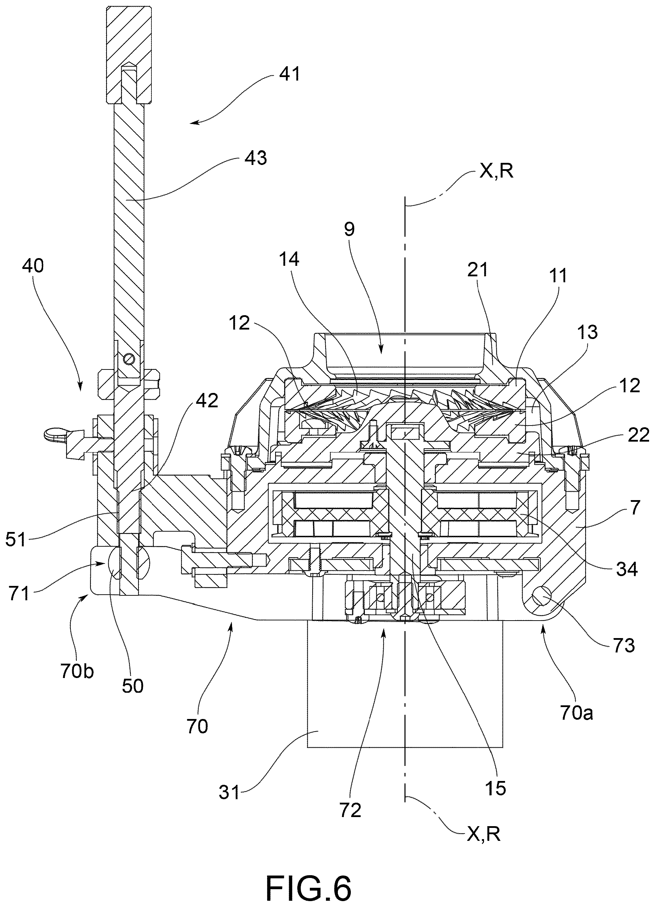

In accordance with an alternative embodiment, illustrated in Figure 6, the fulcrum 73 of said lever 70 may be arranged at one end of the lever 70a itself, while the control element 41 and the axially movable grinder 12 are connected to the lever 70 on the same side with respect to the fulcrum. In this case, a movement with an axial component transmitted by the control element 41 to the lever 70 in a first axial direction results in an axial motion in the same direction on the axially movable grinder 12.

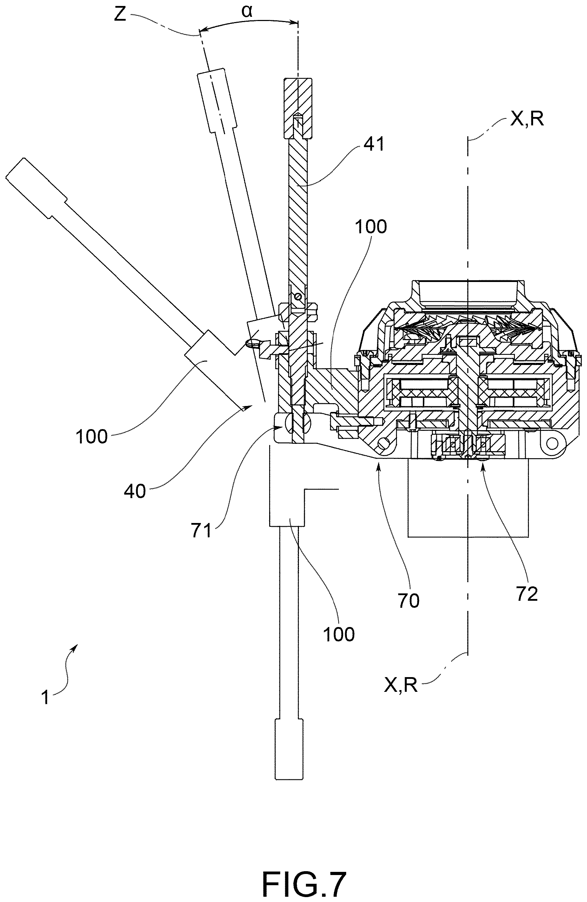

The choice between the configuration of the lever with intermediate fulcrum or the configuration of the lever-end fulcrum, as well as the choice of the relative position of the connection with the control element and movable grinder is related to the need to reduce the dimensions of the grinder-doser 1 upon installation. Advantageously, in order to facilitate the adaptation of the grinder-doser 1 upon installation, the grinder-doser 1 may be modularly provided with different attachment points for both the lever fulcrum and the support appendage of the control element as illustrated in figure 7.

In accordance with a preferred embodiment illustrated in the appended figures, the adjustment device 40 comprises a nut-screw system for controlling the amplitude of the axial movements imposed by said control element 41 on the axially movable grinder 12 by means of said lever 70.

In particular, as illustrated in figure 4, the control element 41 comprises a screw or ring nut 42 that is guided by the body 10 (which is axially fixed) and is engaged with a first nut-screw 50 associated to said lever 70 by means of the first hinge 71. Preferably, the screw or ring nut 42 is guided by the body 10 by means of a second nut-screw 51 integral with the body 10. In particular, the second nut-screw 51 may be integral with said support appendage 100.

Advantageously, the nut-screw system is well suited for manual operation of the control element 41. Alternatively, if the actuation of the control element 41 is automated, the nut-screw system may be replaced by other systems, such as for example a pneumatic cylinder or a rack and pinion system.

Advantageously, the Z-Z axis of said screw or ring nut 42 may be parallel to said axial direction X-X (as illustrated in figures 1 to 6) or it may form an angle of inclination α with respect thereto (as schematically illustrated in figure 7).

Depending on the requirements, the axis Z-Z of the screw 42 of the control element 41 may have any inclination. The inclination with respect to the axial direction X-X is selected depending on the accessibility spaces available at the assembly site of the grinder-doser 1, which is normally part of a more complex machine. Advantageously, in order to adjust the inclination it is sufficient to replace the adjustment appendage 100 with a suitable engagement seat 101.

As illustrated in the appended figures, the screw or ring nut 42 may be provided with a knob 43 for its manual rotation by a user.

Alternatively or in combination, the screw or ring nut 42 may be operatively connected to a motor means for automatic adjustment of the axial distance D between the grinders 11,12. The motor means 60 is schematically represented in figure 3 with a dotted rectangle. It should be noted that the automatic adjustment is not necessarily an alternative to a manual adjustment by the knob 43. In other words, the knob 43 and the automatic adjustment by motor may coexist in the same embodiment.

In particular, the automated actuation of the screw or ring nut 42 may be obtained by means of a stepper motor, connected to a control unit (not shown in the appended figures) which also controls the electric motor 30 actuating the driven grinder 12 in rotation. This system would allow, for example, to set up the grinding based on predetermined "recipes". Operatively, by means of the screw 42 of the control element the granulometry of ground coffee is adjusted using a stepper motor, while by means of an actuation time of the motor 30 the dispensed dose of ground coffee is adjusted.

As can be appreciated from the description, the grinder-doser according to the invention allows overcoming the drawbacks of the prior art.

## Claims

1. A grinder-doser (1) for beans, for example coffee beans, comprising a body (10) which encloses a first grinder (11) supported by a relative first grinder-holder (21), and a second grinder (12) supported by a relative second grinder-holder (22), wherein the first and second grinders (11,12) are facing one to the other along an axial direction (X-X) and are housed in a grinding chamber (13) for coffee beans made inside said body (10), one of said grinders (12) being movable along the axial direction (X-X) with respect to the other grinder (11), said grinder-doser (1) comprising an adjustment device (40) of the relative axial distance (D) between said first and second grinders (11,12), which in turn comprises a control element (41) which is supported by said body (10) in a position offset from said axial direction (X-X) and is kinematically connected to the axially movable grinder (12) by means of a lever (70) pivoted on said body (10) to impose on said axially movable grinder (12) controlled movements along said axial direction (X-X) so as to adjust the relative axial distance (D) between said first and second grinders (11,12), wherein said lever(70) is kinematically connected to said control element by means of a first hinge (71), **characterized in that** said lever (70) is kinematically connected to said axially movable grinder (12) by means of a second hinge (72), the rotation axes (Y1-Y1; Y2-Y2) of said first and second hinges (71,72) being parallel to the fulcrum axis (Y-Y) of said lever (70).

2. Grinder-doser (1) for beans according to claim 1, wherein the axially movable grinder is said second grinder (12) and is connected to drive means (30) for its rotation around said axial direction (X-X), and wherein said second grinder (12) is kinematically connected to said lever (70) via the second grinder-holder (22), which in turn is kinematically connected to said second hinge (72) by interposition of a joint (74) suitable to allow the free rotation of the second grinder-holder (22) and the associated second grinder (12) around said axial direction (X-X) with respect to said lever (70).

3. Grinder-doser (1) for beans according to claim 2, wherein said first grinder (11) is fixed both in rotation and axially.

4. Grinder-doser (1) for beans according to claim 2 or 3, wherein the first grinder (11) is an upper grinder and the second grinder (12) is a lower grinder with reference to said axial direction (X-X) which in use is vertically oriented.

5. Grinder-doser (1) for beans according to claim 4, wherein in use said lever (70) is arranged below said body (10).

6. Grinder-doser (1) for beans according to one or more of the preceding claims, wherein said lever (70) is connected to opposite ends (70a,70b) with respect to its fulcrum (73), respectively to the control element (41) and the axially movable grinder (12).

7. Grinder-doser (1) for beans according to one or more of the claims from 1 to 5, wherein the fulcrum (73) of said lever (70) is arranged at one end of said lever (70a) .

8. Grinder-doser (1) for beans according to any one of the preceding claims, wherein said adjustment device (40) comprises a nut-screw system for controlling the amplitude of the axial movements imposed by said control element (41) on the axially movable grinder (12) by means of said lever (70).

9. Grinder-doser (1) for beans according to claim 8, wherein said control element (41) comprises a screw or ring nut (42) that is guided by the axially fixed body (10) and is engaged with a nut-screw (50) associated to said lever (70) by means of said first hinge (71).

10. Grinder-doser (1) for beans according to claim 9, wherein the axis (Z-Z) of said screw or ring nut (42) can be parallel to said axial direction (X-X) or form an angle of inclination (α) with respect thereto.

11. Grinder-doser (1) for beans according to claim 9 or 10, wherein the screw or ring nut (42) is provided with a knob (43) for its manual rotation by a user.

12. Grinder-doser (1) for beans according to claim 9 or 10, wherein the screw or ring nut (42) is operatively connected to a motor means for automatic adjustment of the axial distance (D) between the grinders (11,12).

## Patentansprüche

1. Mahl-Dosierer bzw. Dosiermühle (1) für Bohnen, beispielsweise Kaffeebohnen, umfassend einen Körper (10), der ein erstes Mahlwerk (11), das durch einen entsprechenden ersten Mahlwerkhalter (21) gestützt bzw. getragen ist, und ein zweites Mahlwerk (12) umschließt, das durch einen entsprechenden zweiten Mahlwerkhalter (22) gestützt bzw. getragen ist, wobei das erste und das zweite Mahlwerk (11, 12) einander entlang einer axialen Richtung (X-X) zugewandt sind und in einer Mahlkammer (13) für Kaffeebohnen untergebracht sind, die im Inneren des Körpers (10) gemacht ist bzw. werden, wobei eines der Mahlwerke (12) entlang der axialen Richtung (X-X) in Bezug auf das andere Mahlwerk (11) beweglich ist, wobei der Mahl-Dosierer (1) eine Einstellvorrichtung (40) für den relativen axialen Abstand (D) zwischen dem ersten und dem zweiten Mahlwerk (11, 12) umfasst, die ihrerseits ein Kontroll- bzw. Steuer- bzw. Regelelement (41) umfasst, das durch den Körper (10) in einer von der axialen Richtung (X-X) versetzten Position gestützt bzw. getragen ist und kinematisch mit dem axial beweglichen Mahlwerk (12) mittels eines Hebels (70) verbunden ist, der an dem Körper (10) schwenkbar ist, um auf das axial bewegliche Mahlwerk (12) kontrollierte Bewegungen entlang der axialen Richtung (X-X) auszuüben, um den relativen axialen Abstand (D) zwischen dem ersten und dem zweiten Mahlwerk (11, 12) einzustellen, wobei der Hebel (70) mittels eines ersten Scharniers (71) kinematisch mit dem Steuer- bzw. Regelelement verbunden ist, **dadurch gekennzeichnet, dass** der Hebel (70) mittels eines zweiten Scharniers (72) kinematisch mit dem axial beweglichen Mahlwerk (12) verbunden ist, wobei die Drehachsen (Y1-Y1; Y2-Y2) des ersten und des zweiten Scharniers (71, 72) parallel zu der Drehpunktachse (Y-Y) des Hebels (70) sind.

2. Mahl-Dosierer (1) für Bohnen nach Anspruch 1, wobei das axial bewegliche Mahlwerk das zweite Mahlwerk (12) ist und mit Antriebsmitteln (30) für seine Drehung um die axiale Richtung (X-X) verbunden ist, und wobei das zweite Mahlwerk (12) kinematisch mit dem Hebel (70) über den zweiten Mahlwerkhalter (22) verbunden ist, der seinerseits kinematisch mit dem zweiten Scharnier (72) verbunden ist, und zwar durch Zwischenanordnung eines Gelenks (74), das geeignet ist, die freie Drehung des zweiten Mahlwerkhalters (22) und des zugehörigen zweiten Mahlwerks (12) um die axiale Richtung (X-X) in Bezug auf den Hebel (70) zu ermöglichen.

3. Mahl-Dosierer (1) für Bohnen nach Anspruch 2, wobei das erste Mahlwerk (11) sowohl drehfest als auch axial fest ist.

4. Mahl-Dosierer (1) für Bohnen nach Anspruch 2 oder 3, wobei das erste Mahlwerk (11) ein oberes Mahlwerk und das zweite Mahlwerk (12) ein unteres Mahlwerk in Bezug auf die axiale Richtung (X-X) ist, die bei Gebrauch vertikal ausgerichtet ist.

5. Mahl-Dosierer (1) für Bohnen nach Anspruch 4, wobei der Hebel (70) bei Gebrauch unterhalb des Körpers (10) angeordnet ist.

6. Mahl-Dosierer (1) für Bohnen nach einem oder mehreren der vorhergehenden Ansprüche, wobei der Hebel (70) mit gegenüberliegenden bzw. entgegengesetzten Enden (70a,70b) in Bezug auf seinen Drehpunkt (73) bzw. mit dem Steuer- bzw. Regelelement (41) und dem axial beweglichen Mahlwerk (12) verbunden ist.

7. Mahl-Dosierer (1) für Bohnen nach einem oder mehreren der Ansprüche 1 bis 5, wobei der Drehpunkt (73) des Hebels (70) an einem Ende des Hebels (70a) angeordnet ist.

8. Mahl-Dosierer (1) für Bohnen nach einem der vorhergehenden Ansprüche, wobei die Einstellvorrichtung (40) ein Mutter-Schrauben-System zum Kontrollieren bzw. Steuern bzw. Regeln der Amplitude der axialen Bewegungen umfasst, die durch das Steuer- bzw. Regelelement (41) auf das axial bewegliche Mahlwerk (12) mittels des Hebels (70) ausgeübt werden.

9. Mahl-Dosierer (1) für Bohnen nach Anspruch 8, wobei das Steuer- bzw. Regelelement (41) eine Schraube oder Ringmutter (42) umfasst, die durch den axial festen Körper (10) geführt ist und mit einer Mutter-Schraube in Eingriff (50) ist, die mittels des ersten Scharniers (71) mit dem Hebel (70) assoziiert bzw. verbunden ist.

10. Mahl-Dosierer (1) für Bohnen nach Anspruch 9, wobei die Achse (Z-Z) der Schraube oder Ringmutter (42) parallel zu der axialen Richtung (X-X) sein kann oder einen Neigungswinkel (α) in Bezug darauf bilden kann.

11. Mahl-Dosierer (1) für Bohnen nach Anspruch 9 oder 10, wobei die Schraube oder Ringmutter (42) mit einem Knopf (43) für ihre manuelle Drehung durch einen Benutzer versehen ist.

12. Mahl-Dosierer (1) für Bohnen nach Anspruch 9 oder 10, wobei die Schraube oder Ringmutter (42) mit operativ einem Motormittel zur automatischen Einstellung des axialen Abstands (D) zwischen den Mahlwerken (11, 12) verbunden ist.

## Revendications

1. Moulin-doseur (1) pour grains, par exemple des grains de café, comprenant un corps (10) qui renferme un premier moulin (11) supporté par un premier support de moulin relatif (21), et un second moulin (12) supporté par un second support de moulin relatif (22), dans lequel les premier et second moulins (11, 12) se font mutuellement face le long d'une direction axiale (X-X) et sont logés dans une chambre de broyage (13) pour grains de café réalisée à l'intérieur dudit corps (10), l'un desdits moulins (12) étant mobile le long de la direction axiale (X-X) par rapport à l'autre moulin (11),
ledit moulin-doseur (1) comprenant un dispositif de réglage (40) de la distance axiale relative (D) entre lesdits premier et second moulins (11, 12), qui comprend à son tour un élément de commande (41) qui est supporté par ledit corps (10) dans une position décalée par rapport à ladite direction axiale (X-X) et est cinématiquement relié au moulin axialement mobile (12) au moyen d'un levier (70) qui pivote sur ledit corps (10) pour imposer audit moulin axialement mobile (12) des mouvements commandés le long de ladite direction axiale (X-X) de manière à régler la distance axiale relative (D) entre lesdits premier et second moulins (11,12), dans lequel
ledit levier (70) est relié cinématiquement audit élément de commande au moyen d'une première charnière (71), **caractérisé en ce que** ledit levier (70) est relié cinématiquement audit moulin axialement mobile (12) au moyen d'une seconde charnière (72), les axes de rotation (Y1-Y1 ; Y2-Y2) desdites première et seconde charnières (71, 72) étant parallèles à l'axe de pivotement (Y-Y) dudit levier (70).

2. Moulin-doseur (1) pour grains selon la revendication 1, dans lequel le moulin axialement mobile est ledit second moulin (12) et est relié à des moyens d'entraînement (30) pour sa rotation autour de ladite direction axiale (X-X), et dans lequel ledit second moulin (12) est relié cinématiquement audit levier (70) via le second support de moulin (22), qui est à son tour relié cinématiquement à ladite seconde charnière (72) par interposition d'une articulation (74) adaptée pour permettre la libre rotation du second support de moulin (22) et du second moulin (12) associé autour de ladite direction axiale (X-X) par rapport audit levier (70).

3. Moulin-doseur (1) pour grains selon la revendication 2, dans lequel ledit premier moulin (11) est fixe à la fois en rotation et axialement.

4. Moulin-doseur (1) pour grains selon la revendication 2 ou 3, dans lequel le premier moulin (11) est un moulin supérieur et le second moulin (12) est un moulin inférieur en référence à ladite direction axiale (X-X) qui, en utilisation, est orientée verticalement.

5. Moulin-doseur (1) pour grains selon la revendication 4, dans lequel, en utilisation, ledit levier (70) est disposé en dessous dudit corps (10).

6. Moulin-doseur (1) pour grains selon une ou plusieurs des revendications précédentes, dans lequel ledit levier (70) est relié à des extrémités opposées (70a, 70b) par rapport à son point de pivotement (73), respectivement à l'élément de commande (41) et au moulin axialement mobile (12).

7. Moulin-doseur (1) pour grains selon une ou plusieurs des revendications 1 à 5, dans lequel le point de pivotement (73) dudit levier (70) est disposé à une extrémité dudit levier (70a).

8. Moulin-doseur (1) pour grains selon l'une quelconque des revendications précédentes, dans lequel ledit dispositif de réglage (40) comprend un système écrou-vis pour commander l'amplitude des mouvements axiaux imposés par ledit élément de commande (41) sur le moulin axialement mobile (12) au moyen dudit levier (70).

9. Moulin-doseur (1) pour grains selon la revendication 8, dans lequel ledit élément de commande (41) comprend une vis ou un écrou annulaire (42) qui est guidé par le corps axialement fixe (10) et est en prise avec un écrou-vis (50) associé audit levier (70) au moyen de ladite première charnière (71).

10. Moulin-doseur (1) pour grains selon la revendication 9, dans lequel l'axe (Z-Z) de ladite vis ou dudit écrou annulaire (42) peut être parallèle à ladite direction axiale (X-X) ou former un angle d'inclinaison (α) par rapport à celle-ci.

11. Moulin-doseur (1) pour grains selon la revendication 9 ou 10, dans lequel la vis ou l'écrou annulaire (42) est muni(e) d'un bouton (43) pour sa rotation manuelle par un utilisateur.

12. Moulin-doseur (1) pour grains selon la revendication 9 ou 10, dans lequel la vis ou l'écrou annulaire (42) est fonctionnellement relié(e) à des moyens moteur pour un réglage automatique de la distance axiale (D) entre les moulins (11, 12).
